# EUROPÄISCHE PATENTANMELDUNG

(11) **EP 1 738 865 A1**
(43) Veröffentlichungstag der Anmeldung: **03.01.2007**
(21) Anmeldenummer: 05014037.5
(22) Anmeldetag: 29.06.2005
(51) Int. Cl.: B23Q 11/00, F16F 15/36, B23B 31/11

(54) **Werkzeug-Spann-Einrichtung für drehantreibbare Werkzeuge**

(71) Anmelder: August Rüggeberg GmbH & Co. KG, 51709 Marienheide (DE)
(72) Erfinder: Wördehoff, Martin, 51709 Marienheide (DE); Erlinghagen, Jörg, 51709 Marienheide (DE); Schneider, Theo, 42699 Solingen (DE)
(74) Vertreter: Rau, Manfred

(57) **Zusammenfassung**

Eine Werkzeug-Spann-Einrichtung für drehantreibbare Werkzeuge (9) weist eine Werkzeug-Spann-Vorrichtung (11) zur lösbaren Anbringung eines Werkzeugs (9) auf. An der Werkzeug-Spann-Vorrichtung (11) ist eine Unwucht-Ausgleichs-Einrichtung (10) ausgebildet, innerhalb derer eine Befestigungs-Einrichtung zur lösbaren Befestigung an einem Biegewellen-Antrieb oder einem Gerad-Schleifer angeordnet ist.

## Beschreibung

Derartige Werkzeug-Spann-Einrichtungen werden sehr oft mittels Biegewellen-Antrieben, Geradschleifern oder handelsüblichen Bohrmaschinen angetrieben. Sie weisen eine Werkzeug-Spann-Vorrichtung, z. B. zur lösbaren Anbringung einer Schleif- bzw. Polier-Scheibe und eine Befestigungs-Einrichtung, z. B. zur lösbaren Befestigung an einem Biegewellen-Antrieb oder einem Gerad-Schleifer auf. Die drehantreibbaren Werkzeuge, z. B. die Schleif- bzw. Polier-Scheiben oder Fächer-Schleifer, werden vom Anwender sehr oft in Eigenfertigung hergestellt, wobei auf das den Schleifbelag tragende Grundmaterial Schleifkorn aufgelegt wird. Derartige Werkzeuge können erhebliche Unwuchten aufweisen. Diese Unwucht wird noch dadurch verstärkt, dass die Scheiben nicht exakt konzentrisch auf die Werkzeug-Spann-Vorrichtung aufgespannt werden können und dass der Anwender darüber hinaus die äußere Geometrie der Werkzeuge frei profiliert. Weiterhin verändern diese Werkzeuge während ihres Einsatzes ständig ihre Geometrie und Masseverteilung, d. h. die Lage ihres Schwerpunktes, sodass ein Auswuchten vor ihrem Einsatz zu keinem dauerhaften Ergebnis führt.

Für so genannte Winkelschleifer ist es bekannt geworden, in das Winkelschleif-Gerät eine Unwucht-Ausgleichss-Einrichtung, die als Autobalancer bezeichnet wird, zur Vibrationsreduzierung einzubauen bzw. eine separate Umwucht-Ausgleichss-Einrichtung auf die Abtriebswelle des Winkelschleifers aufzusetzen. Auf derartigen Winkelschleifern werden ausschließlich Werkzeuge verwendet, deren Außendurchmesser größer ist als der Winkelkopf. Diese Ausgestaltung kann auf Werkzeug-Spann-Einrichtungen der eingangs genannten Art mit Biegewellen-Antrieb oder Gerad-Schleifern nicht eingesetzt werden, da beim Biegewellen-Antrieb oder beim Gerad-Schleifer der Antriebskopf, bedingt durch die Bauweise, zu klein ist.

Der Erfindung liegt daher die Aufgabe zugrunde, eine Werkzeug-Spann-Einrichtung der gattungsgemäßen Art so auszugestalten, dass ein wirksamer Unwucht-Ausgleich stattfindet.

Diese Aufgabe wird erfindungsgemäß durch die Merkmale des Anspruches 1 gelöst. Die Unwucht-Ausgleichs-Einrichtung ist bei der erfindungsgemäßen Werkzeug-Spann-Einrichtung in diese integriert, wobei wiederum die Befestigungs-Einrichtung zur lösbaren Befestigung an einem Biegewellen-Antrieb oder einem Gerad-Schleifer zumindest weitgehend innerhalb der Unwucht-Ausgleichs-Einrichtung und der Werkzeug-Spann-Vorrichtung angeordnet ist.

Die Unteransprüche geben vorteilhafte Ausgestaltungen dieser Integration wieder.

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: eine mittels Biegewellen-Antrieb drehantreibbare Schleif- bzw. Polier-Einrichtung mit einer Werkzeug-Spann-Einrichtung nach der Erfindung in Explosionsdarstellung,
- Fig. 2: die Werkzeug-Spann-Einrichtung im Längsschnitt,
- Fig. 3: einen Querschnitt durch die Werkzeug-Spann-Einrichtung gemäß der Schnittlinie III-III in Fig. 2, und
- Fig. 4: eine mittels eines Gerad-Schleifers drehantreibbare Schleif- bzw.
Polier-Einrichtung mit einer Werkzeug-Spann-Einrichtung nach der Erfindung in Explosionsdarstellung.

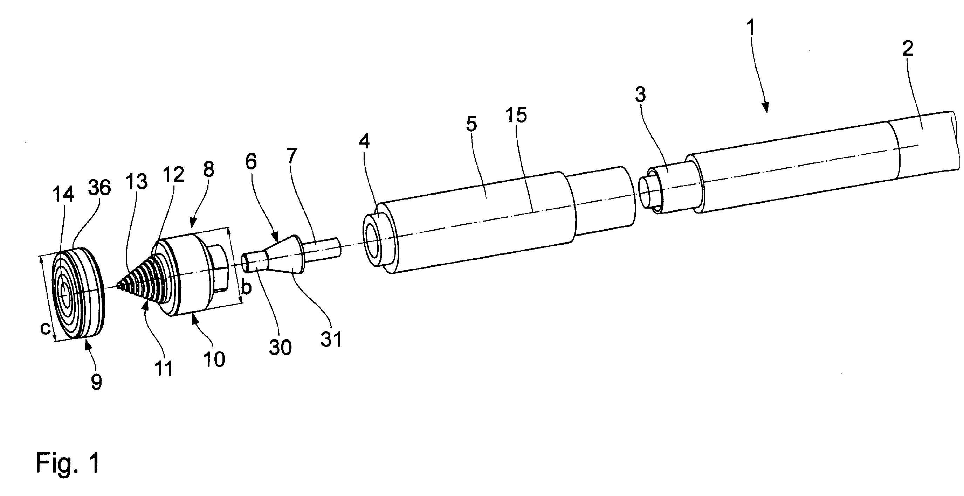

Die in Fig. 1 dargestellte Schleif- bzw. Polier-Einrichtung weist zum Antrieb eine so genannte Biegewelle 1 auf, die üblicherweise aus einem biegsamen aber scheiteldruckfesten Hüll-Schlauch 2 und einer in diesem angeordneten drehantreibbaren biegsamen Welle 3 gebildet ist. Der Antrieb erfolgt mittels eines in der Zeichnung nicht dargestellten Motors. Am Abtriebsende der Biegwelle 1 ist eine Hülse 4 vorgesehen, die ein Innengewinde aufweisen kann. Anstelle dieser Hülse 4 mit oder ohne Innengewinde kann auch eine übliche Spannzange vorgesehen sein.

Mit dem Abtriebs-Ende der Welle 3 ist ein Verbindungs-Bolzen 6 verbindbar, der einen Schaft 7 aufweist, der in die mit der Welle 3 verbundene Hülse 4 einsteckbar oder bei Vorhandensein eines Gewindes einschraubbar ist. Das Abtriebs-Ende des Hüll-Schlauchs 2 ist mit einem rohrförmigen Handgriff 5 für einen Benutzer versehen und bildet einen Antriebskopf. An dem Verbindungs-Bolzen 6 wird wiederum eine Werkzeug-Spann-Einrichtung 8 befestigt, an der das eigentliche Werkzeug 9 befestigt wird, das als drehantreibbares Werkzeug 9, z. B. einer Schleif- oder Polier-Scheibe, ausgebildet ist, die aus verhältnismäßig weichem Material, wie beispielsweise Filz oder dergleichen, mit aufgebrachtem Schleifkornbelag besteht.

In gleicher Weise können Lamellen-Schleifer oder Bürsten eingesetzt werden.

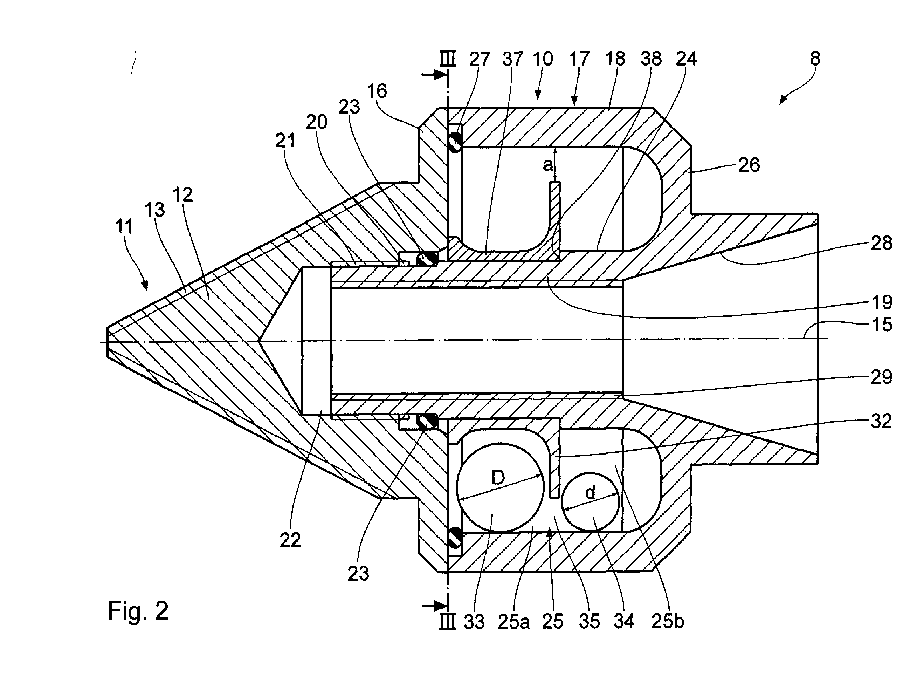

Wie sich insbesondere aus Figur 2 ergibt, weist die Werkzeug-Spann-Einrichtung 8 eine Unwucht-Ausgleichs-Einrichtung 10 und eine Werkzeug-Spann-Vorrichtung 11 auf, bei der es sich im dargestellten Fall um einen Spann-Konus 12 mit einem entsprechend konisch verlaufenden Gewinde 13 handelt. Die Werkzeug-Spann-Vorrichtung 11 wird in die zentrische Öffnung 14 des ringzylindrischen Werkzeugs 9 eingeführt und mit diesem verbunden. Dies geschieht im dargestellten Ausführungsbeispiel durch Aufschrauben des Werkzeugs 9 auf den Spann-Konus 12.

Wenn das Werkzeug 9 anstelle der zentrischen Öffnung 14 einen Schaft aufweist, wird dieser in eine Spannzange der Werkzeug-Spann-Einrichtung 11 eingeführt und verspannt. Eine solche bekannte Spannzange tritt an die Stelle der in Fig. 1 dargestellten Werkzeug-Spann-Vorrichtung 11. Derartige Spann-Zangen sind bekannt und in der Praxis üblich.

Das Werkzeug wird mit seiner zentrischen Öffnung 14 auf das Gewinde 13 des Spannkonus 12 soweit aufgeschraubt, bis es fest sitzt. Es kommt hierbei nicht zur Anlage an einem ringförmigen Stirn-Flansch 16 der Werkzeug-Spann-Vorrichtung 11, der am Fuß des Spann-Konus 12 ausgebildet ist.

Die Unwucht-Ausgleichs-Einrichtung 10 weist ein Gehäuse 17 auf, das mit seiner ringzylindrischen Außenwand 18 in Richtung der Längs-Achse 15 an dem Stirn-Flansch 16 anliegt. Das Gehäuse 17 weist weiterhin einen koaxial zur Längs-Achse 15 angeordneten Rohr-Stutzen 19 auf, der mittels eines Außengewindes 20 in ein Innengewinde 21 einer Sack-Bohrung 22 im Spann-Konus 12 eingeschraubt ist, wobei zwischen dem Rohr-Stutzen 19 und der Wand der Sack-Bohrung 22 eine Dichtung 23 angeordnet ist. Der Rohr-Stutzen 19 bildet außerhalb des Spann-Konus 12 eine Innenwand 24 eines im Gehäuse 17 ausgebildeten Ausgleichs-Raums 25, der durch die zylindrische Außenwand 18, die Innenwand 24, den Stirn-Flansch 16 und eine radiale Bodenwand 26 des Gehäuses 17 umgrenzt wird und der mittels der Dichtung 23 und einer Dichtung 27 zwischen Außenwand 18 und Stirn-Flansch 16 nach außen flüssigkeitsdicht abgedichtet ist. Das abdichtende Verspannen der Dichtung 27 erfolgt durch Einschrauben des Rohr-Stutzens 19 in den Spann-Konus 12.

In der Unwucht-Ausgleichs-Einrichtung 10 ist ein zu dem der Spann-Vorrichtung 11 abgewandten Ende hin offener Einführ- bzw. Zentrier-Konus 28 ausbildet, an den sich in den Rohr-Stutzen 19 hinein ein Innengewinde-Abschnitt 29 anschließt. Korrelierend hierzu weist der Verbindungs-Bolzen 6 einen Außengewinde-Abschnitt 30 und einen dem Konus 28 exakt angepassten Konus-Bolzen 31 auf. Zur Montage der Werkzeug-Spann-Einrichtung 8 an der Biegewelle 1 wird die Werkzeug-Spann-Einrichtung 8 mit ihrem Innengewinde-Abschnitt 29 auf den Außengewinde-Abschnitt 30 aufgeschraubt, bis der Konus-Bolzen 31 in den Einführ- bzw. Zentrier-Konus 28 einläuft und in diesem in Richtung der Längs-Achse 15 und radial hierzu exakt fixiert wird, sodass eine in beiden genannten Richtungen spielfreie Verbindung zwischen der Biegewelle 1 und der Werkzeug-Spann-Einrichtung 8 hergestellt wird. Wie sich aus der Zeichnung und dem Vorstehenden ergibt, bildet der Rohr-Stutzen 19 mit dem Innengewinde 21 und dem Einführ- bzw. Zentrier-Konus 28 eine Befestigungseinrichtung, die weitgehend innerhalb der Unwucht-Ausgleichs-Einrichtung 10 bzw. der Werkzeug-Spann-Vorrichtung 11 angeordnet ist, sodass hierdurch kein zusätzlicher Raum in Richtung der Längs-Achse 15 beansprucht wird.

Im dargestellten Ausführungsbeispiel ist der Ausgleichs-Raum 25 in zwei Teil-Räume 25a und 25b unterteilt, und zwar durch einen ringförmigen Radial-Steg 32, der die beiden Teil-Ausgleichs-Räume 25a, 25b im radial innenliegenden, also der Innenwand 24 benachbarten Bereich in Richtung der Längs-Achse 15 voneinander trennt. Im radial außenliegenden Bereich, also benachbart zur Außenwand 18, sind die beiden Teil-Räume 25a, 25b, aber noch miteinander verbunden.

Im Teil-Ausgleichs-Raum 25a sind Unwucht-Ausgleichs-Kugeln 33 mit einem Durchmesser D angeordnet, während im Teil-Ausgleichs-Raum 25b Unwucht-Ausgleichs-Kugeln 34 mit einem Durchmesser d angeordnet sind. Wie Figur 2 erkennen lässt, gilt D > d. Die Unwucht-Ausgleichs-Kugeln 33, 34 können aber auch gleichen Durchmesser aufweisen. Die radiale Weite a des Spalts 35 zwischen dem Steg 32 und der Außenwand 18 ist kleiner als der kleinere der Durchmesser D bzw. d, sodass weder die Kugeln 33 noch die Kugeln 34 aus dem ihnen zugeordneten Teil-Ausgleichs-Raum 25a bzw. 25b in den jeweils benachbarten Teil-Ausgleichs-Raum 25b bzw. 25a gelangen können.

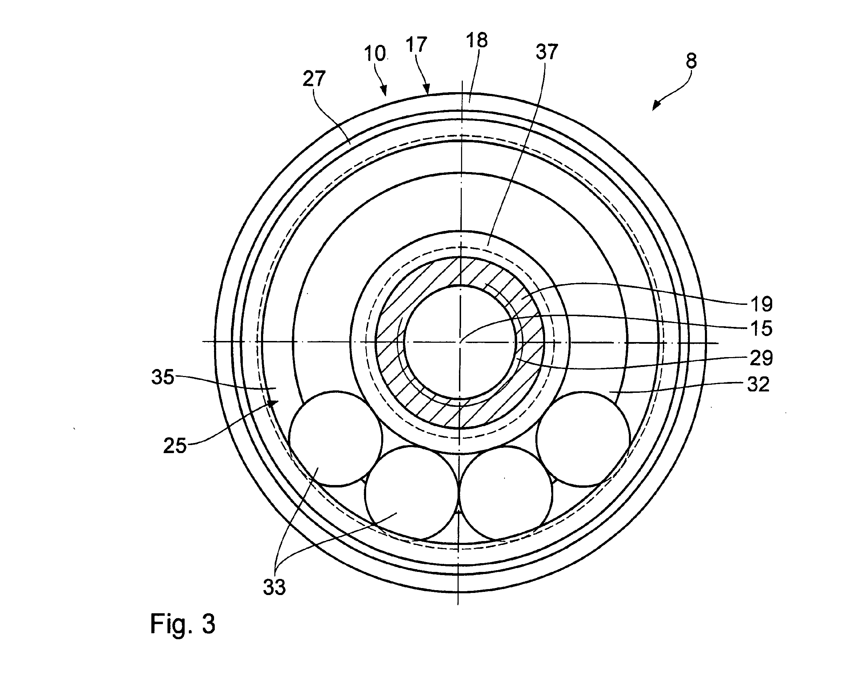

Wie Figur 3 erkennen lässt, sind im konkreten Fall vier Unwucht-Ausgleichs-Kugeln 33 vorgesehen. Es gilt generell, dass mindestens drei Kugeln 33 oder auch 34 vorgesehen sein sollten. Der gesamte Ausgleichs-Raum 25 ist im Übrigen mit Öl gefüllt, das eine geeignete Viskosität aufweisen muss. Die Viskosität ist abhängig von der Oberfläche der Kugeln 33 bzw. 34 und dem Gewicht der Kugeln 33, 34. Es können Kugeln 33, 34 aus Stahl, aber auch aus Hartmetall eingesetzt werden, das eine höheres spezifisches Gewicht als Stahl hat.

Die dargestellte Ausführung mit zwei in Richtung der Längs-Achse 15 hintereinander angeordneten Reihen von Kugeln 33, 34 hat den Vorteil, dass der Außendurchmesser b des Gehäuses 17 und damit des Stirn-Flansches 16 verhältnismäßig klein sein kann. Dies ist insbesondere dann von Bedeutung, wenn der Außendurchmesser c des Werkzeugs 9 klein ist. Grundsätzlich gilt als Forderung: c > b, damit beim Betrieb das rotierende Gehäuse 17 nicht mit dem zu bearbeitenden Werkstück in Berührung kommt. Das Werkzeug 9 wird im Wesentlichen mit seiner Außen-Umfangs-Fläche 36 eingesetzt.

Wie Figur 2 erkennen lässt, ist der Radial-Steg 32 als eigenständiges Bauteil ausgestaltet, das beim Auseinanderschrauben von Werkzeug-Spann-Vorrichtung 11 und Unwucht-Ausgleichs-Einrichtung 10 von dem Rohr-Stutzen 19 abgezogen werden kann. Sie weist hierzu einen hülsenartigen Abschnitt 37 auf, der beim Zusammenschrauben von Werkzeug-Spann-Vorrichtung 11 und Unwucht-Ausgleichs-Einrichtung 10 zwischen einem Anschlag-Bund 38 des Rohr-Stutzens 19 und dem Stirn-Flansch 16 fixiert wird.

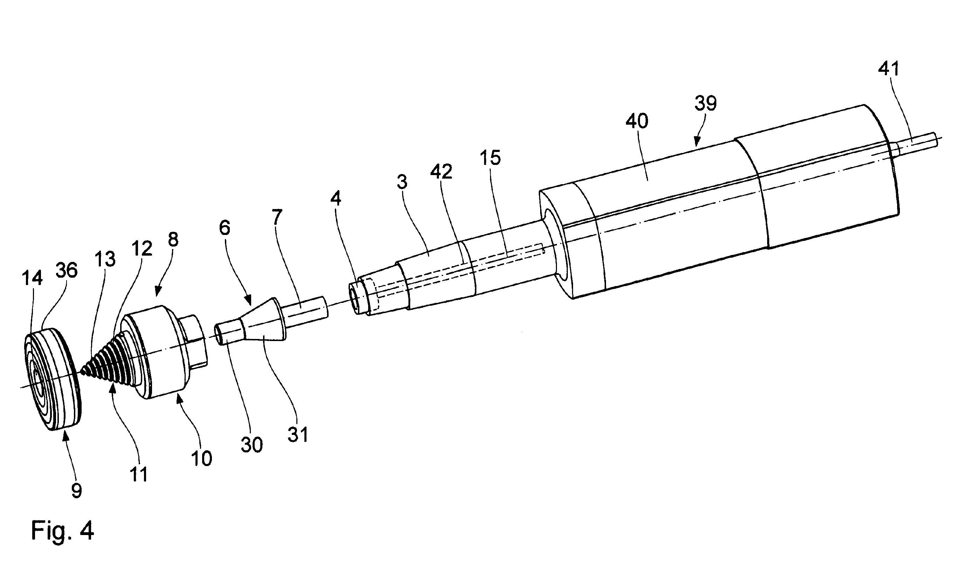

Anstelle des in Fig. 1 dargestellten Biegewellen-Antriebs kann auch ein Gerad-Schleifer 39 vorgesehen sein, der in Fig. 4 dargestellt ist. Der Gerad-Schleifer bildet einen Antriebskopf. Ein solcher Gerad-Schleifer 39 weist ein als Handgriff 40 dienendes gestrecktes schlankes Gehäuse auf, in dem ein nicht dargestellter Antriebsmotor untergebracht ist. Es ist nur die elektrische Versorgungs-Leitung 41 angedeutet. Die Welle 42 des Gerad-Schleifers 39 ist an ihrem Abtriebsende mit der bereits erwähnten Hülse 4 versehen, in die der Verbindungs-Bolzen 6 einsetzbar ist. Im Übrigen gilt die vorherige Beschreibung.

Der Wirkungsmechanismus der Unwucht-Ausgleichs-Einrichtung 10 geht auf ein bekanntes physikalisches Prinzip zurück; die den Ausgleichs-Raum 25 und ― bei Vorhandensein ― die Teil-Ausgleichs-Räume 25a bzw. 25b nicht über den vollen Umfang ausfüllenden Ausgleichs-Kugeln 33 bzw. 34 konzentrieren sich bei Vorhandensein einer Unwucht und bei Drehantrieb der Werkzeug-Spann-Einrichtung 8 samt Werkzeug 9 auf der der entsprechenden Unwucht diametral gegenüberliegenden Seite, sodass zumindest ein Teil-Ausgleich der Unwucht und bei optimaler Ausgestaltung ein vollständiger Ausgleich der Unwucht stattfindet.

Durch die geschilderte Ausgestaltung kann eine Anpassung an die Unwucht-Verhältnisse erfolgen, indem z. B. eine unterschiedliche Zahl von Kugeln 33 bzw. 34, Kugeln unterschiedlichen Durchmessers oder unterschiedlicher Dichte des Werkstoffes eingesetzt werden kann. Das Öffnen des Ausgleichs-Raums 25 durch Abschrauben des Gehäuses 17 von der Werkzeug-Spann-Vorrichtung 11 und das anschließende Wiederanschrauben nach entsprechender Ausrüstung mit Kugeln 33 bzw. 34 ist in einfacher Weise möglich.

## Patentansprüche

1. Werkzeug-Spann-Einrichtung für drehantreibbare Werkzeuge (9),
- mit einer Werkzeug-Spann-Vorrichtung (11) zur lösbaren Anbringung eines Werkzeugs (9)
- mit einer an der Werkzeug-Spann-Vorrichtung (11) angebrachten Unwucht-Ausgleichs-Einrichtung (10), die
-- ein ringförmiges, einen Ausgleichs-Raum (25) umschließendes Gehäuse (17) und
-- in dem Gehäuse (17) befindliche Unwucht-Ausgleichs-Kugeln (33, 34)
aufweist,
- mit einer Befestigungs-Einrichtung zur lösbaren Befestigung an einem Biegewellen-Antrieb oder einem Gerad-Schleifer (39), die im Wesentlichen innerhalb der Unwucht-Ausgleichs-Einrichtung (10) angeordnet ist, und
- mit einer gemeinsamen Längs-Achse (15) als Symmetrie-Achse.

2. Werkzeug-Spann-Einrichtung nach Anspruch 1, **dadurch gekennzeichnet,**
**dass** das Gehäuse (17) lösbar mit der Werkzeug-Spann-Vorrichtung (11) verbunden ist.

3. Werkzeug-Spann-Einrichtung nach Anspruch 1 oder 2, **dadurch gekennzeichnet,**
**dass** eine den Ausgleichs-Raum (25) begrenzende Innenwand (24) einen Innengewinde-Abschnitt (29) als Teil der Befestigungs-Einrichtung aufweist.

4. Werkzeug-Spann-Einrichtung nach Anspruch 3, **dadurch gekennzeichnet,**
**dass** die Innenwand (24) Teil eines Rohr-Stutzens (19) ist, der mit der Werkzeug-Spann-Vorrichtung (11) lösbar verbunden ist.

5. Werkzeug-Spann-Einrichtung nach einem der Ansprüche 1 bis 4, **dadurch gekennzeichnet,**
**dass** die Befestigungs-Einrichtung einen Einführ- bzw. Zentrier-Konus (28) aufweist, der sich zu einem der Werkzeug-Spann-Vorrichtung (11) abgewandten Ende hin öffnet und erweitert.

6. Werkzeug-Spann-Einrichtung nach einem der Ansprüche 1 bis 5, **dadurch gekennzeichnet,**
**dass** der Ausgleichs-Raum (25) in mehrere, in Richtung der Längs-Achse (15) hintereinanderliegende Teil-Ausgleichs-Räume (25a, 25b) unterteilt ist, in denen jeweils Unwucht-Ausgleichs-Kugeln (33, 34) angeordnet sind.

7. Werkzeug-Spann-Einrichtung nach einem der Ansprüche 1 bis 6, **dadurch gekennzeichnet,**
**dass** die Teil-Ausgleichs-Räume (25a, 25b) mittels eines lösbar angeordneten Steges (32) voneinander getrennt sind.
